# EUROPEAN PATENT SPECIFICATION

(11) **EP 2 554 355 B1**
(45) Date of publication and mention of the grant of the patent: **16.12.2015**
(21) Application number: 12178693.3
(22) Date of filing: 31.07.2012
(51) Int. Cl.: B29C 49/06

(54) **Apparatus and method for manufacturing containers**
Vorrichtung und Verfahren zur Herstellung von Behältern
Dispositif et procédé pour la fabrication des récipients

(30) Priority: 05.08.2011 IT MI20111510
(43) Date of publication of application: 06.02.2013
(73) Proprietor: Cantoni S.r.l., 23821 Abbadia Lariana (Lecco) (IT)
(72) Inventor: Cantoni, Fabio, 23827 Lierna (Lecco) (IT)
(74) Representative: Petruzziello, Aldo

(56) References cited:
- EP-A1- 0 802 035
- EP-A2- 0 432 916
- FR-A1- 2 353 383
- GB-A- 1 308 781
- GB-A- 1 367 913
- GB-A- 2 422 571
- US-A- 2 864 124
- US-A- 4 065 246
- US-A- 4 472 131
- US-A1- 2008 035 602

## Description

The present invention relates in general to the production of containers, such as jars, bottles or the like, in plastic material, more particularly polyethylene terephthalate (PET), polypropylene (PP), polyethylene (PE) or polycarbonate (PC).

Generally a container in plastic, such as for example a bottle or a jar, provides first of all for the formation of parisons. These parisons generally have a hollow cylindrical shape or the like with a rounded base or closed at one end and a mouth, optionally threaded externally, at the other end, whereon a cap is applied. They have a substantial wall thickness, of the order of 3-4 mm, according to the dimensions of the containers which they are intended to form. The parisons are obtained through injection moulding in an injection chamber formed between a die and a punch, and are then cooled in order to be stored or undergo further processes.

The parisons then move subsequently to a special apparatus which performs a blowing and confers to the parisons the required shape.

Currently the phases of injection moulding and blowing are therefore performed on two different apparatuses, which entails a dead time in production consisting of the phase of extraction from the mould and of feeding into the machine for the blowing. Since the end product has to have a low cost, there is in the field a desperate search in order to reduce the inherent costs and the production times. It would therefore be desirable to avoid the dead times which elapse between the expelling of the parison and the insertion in the machine for the blowing, reducing the times and therefore increasing production.

US 4,472,131 describes a method and an apparatus for the manufacture of parisons in plastic material with biaxial molecular orientation obtained by means of an injection moulding together with a cooling, a subcooling and a conditioning, in an injection machine provided with at least one injection mould and at least two subcooling moulds.

GB 1367913 describes a method and an apparatus for producing, filling and sealing containers made in plastic material manufactured by means of injection moulding in a first station and transferred, in succession and in an alternate manner, to successive stations wherein said unprocessed containers are shaped by means of a process of moulding through blowing and subsequently filled and sealed. The apparatus comprises a machine with five workstations, defined by a central injection moulding station, two lateral unloading stations and two intermediate stations of blowing, filling and sealing.

US 2,864,124 describes a method and an apparatus for making in a simultaneous manner bottles in plastic material with said apparatus defined by a machine comprising a parisons moulding station, intermediate with respect to two lateral blowing stations, and a pair of supports for gluing and means for moving said supports between the parison mould and one of the moulds for blowing in an independent manner with respect to the other support.

GB2422571 describes an apparatus suitable for being connected to a traditional machine for injection moulding.

The main object of the present invention is, therefore, that of providing an apparatus for the production of plastic containers, able to eliminate, or at least reduce, the disadvantages stated above with reference to the production systems known to the state of the art.

Another object of the present invention is that of providing a process which reduces the overall times of production of plastic containers, obtaining greater production and reducing the overall costs.

A further object is to provide an apparatus for the production of containers in plastic which is easy to manufacture and can be obtained at competitive production costs.

These and other objects, which will be made clearer herein below, are achieved in accordance with the invention with the features listed in the appended independent claim 1.

According to the invention an apparatus is therefore provided, suitable for being connected to a traditional machine for injection moulding, for the production of containers in plastic material, such as jars, bottles or the like, comprising a fixed plate or back plate connected to an injection system for the moulding of the plastic and a movable plate carrying one or more punches for the production of parisons, where the movable plate is carried by a frame sliding axially in the direction of the back plate and is fixed thereto via a pair of tracks whereon it slides in transverse direction.

The back plate comprises at least one central station provided with injection systems for the moulding of the parisons and at least two lateral stations provided with dies with respective seats for accommodating the parisons obtained, and the movable plate comprises at least two identical stations provided with punches and with blowing systems connected to the punches in such a way that, when the two plates are in contact, in one of the stations the moulding of the parisons takes place and simultaneously in the other the blowing of the parisons for the production of containers takes place.

In this way it is possible to obtain by means of the same apparatus both the production of parisons and the production of finished plastic containers, and in particular one or two types of finished products.

Moreover, according to the invention, a method is also provided for forming plastic containers which uses the apparatus defined above, consisting in bringing one of said stations of the movable plate alternately opposite to the central injection station of the back plate and the other station opposite to one of the lateral blowing stations, in such a way that, at each contact between the movable plate and the back plate in one of said stations of the movable plate, moulding of the parisons takes place and simultaneously in the other station blowing of the containers takes place.

The new process and the new apparatus allow major advantages to be obtained, including that mentioned above of reducing the dead times and increasing the numbers and varying the production, reducing the costs.

Advantageous aspects of the invention are disclosed by the dependent claims.

Further features of the invention will be made clearer by the following detailed description, referred to one of its embodiments purely by way of a non-limiting example, illustrated in the accompanying drawings, in which:
Figure 1 is a schematic view of a parison before undergoing the blowing process;
Figure 2 is a schematic view of two possible containers which can be obtained from the parison of Figure 1;
Figure 3 is a perspective view of an apparatus according to the invention after the containers have been obtained on one station and the parisons on the other;
Figure 4 is a perspective view like Figure 3 wherein the formed containers have been extracted and the stations of the movable plate are translated towards the right;
Figure 5 is a perspective view like Figure 4, where the two plates are in contact in order to perform the injection and the blowing;
Figure 6 is a perspective view of the apparatus wherein on one station the parisons have been produced and on the other the containers, with the movable plate translated towards the left;

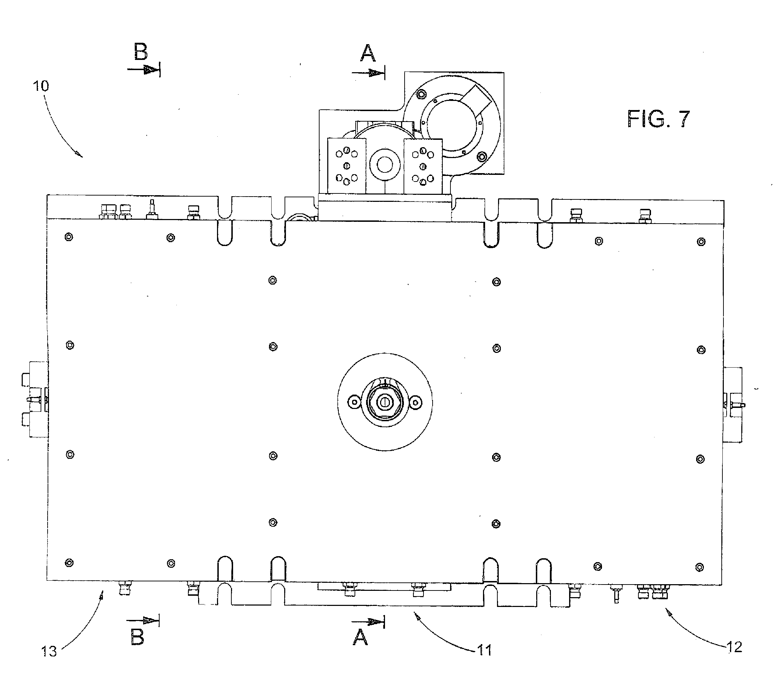

Figure 7 is a plan view of the apparatus taken from the rear of the back plate;
Figure 8 is a sectioned view of the apparatus taken along line A-A in Figure 7;
Figure 9 is a sectioned view of the apparatus taken along line B-B in Figure 7; and
Figure 10 shows in a schematic frontal view a back plate used in an apparatus according to the invention.

In the accompanying drawings, identical or similar parts or components are denoted by the same reference numerals.

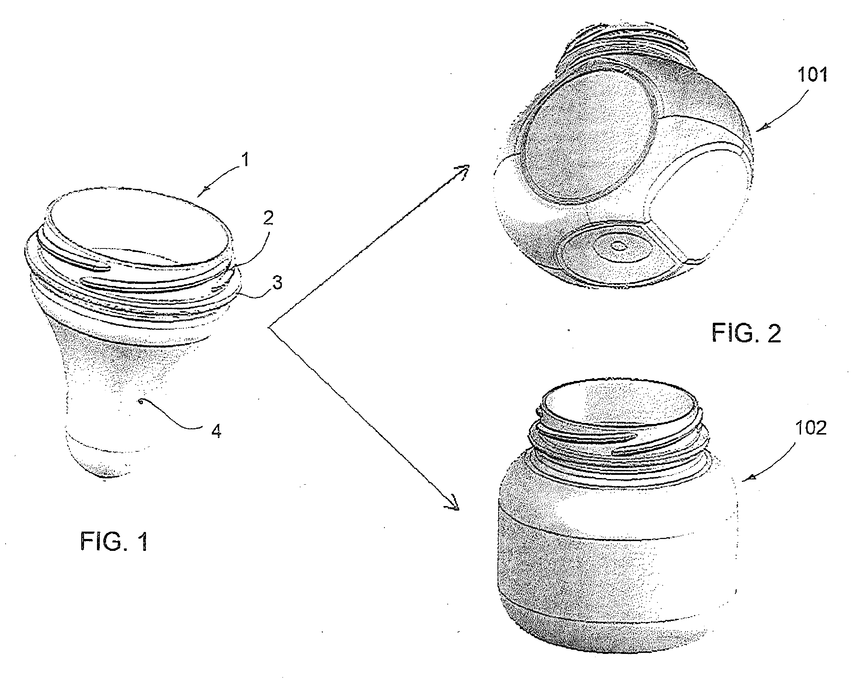

Referring to Figure 1, a parison in plastic material, for example in PET, is denoted overall by reference numeral 1. The parison 1 has in general a neck 2, threaded externally, a flange 3 and a body 4, closed at its end, of high thickness, variable according to the container to be formed. The neck 2 defines instead an open end. The parison illustrated has a vaguely bell shape; however it will be clear that this shape is purely illustrative and any shape of the parison 1 can be used, according to the container to be obtained, without departing from the object of the present invention. After having been formed through a process of injection moulding, the parison 1 takes on its definitive shape only through a process of blowing. Figure 2 illustrates two containers 101, 101' which can be obtained from the parison 1. It is evident that the final shape of the container depends only on the shape of the mould used during blowing.

The formation of the parison 1 takes place through injection moulding of the plastic material and it is a process well known to the persons skilled in the art. In practice, the procedure is as follows. In a machine for injection moulding a movable plate moves in axial direction until coming into contact with a fixed plate (back plate). In the back plate the injection unit is present which is fed by a worm screw which receives the plastic material in granules coming from a hopper. The movable plate carries one or more projecting punches which, when the two plates are in contact, are accommodated by one or more corresponding dies which define respective injection chambers.

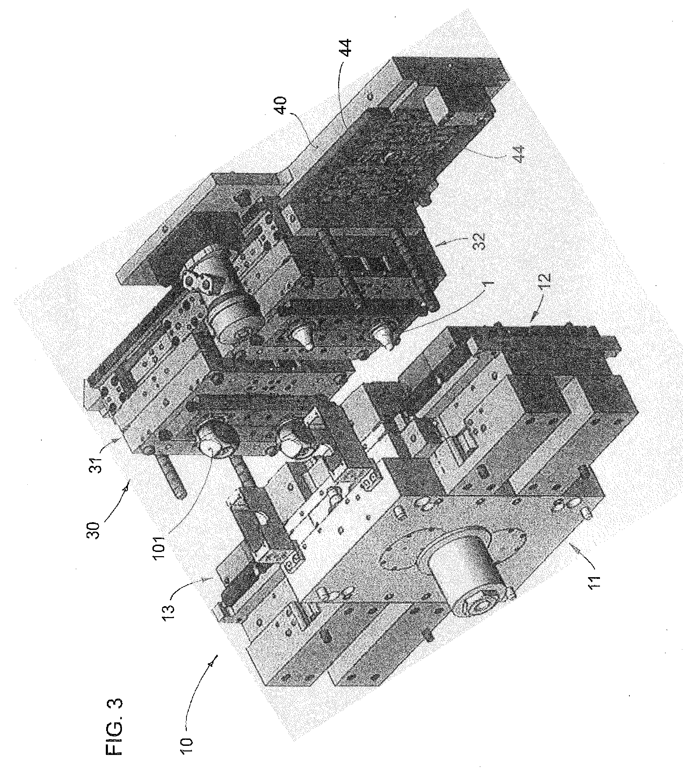

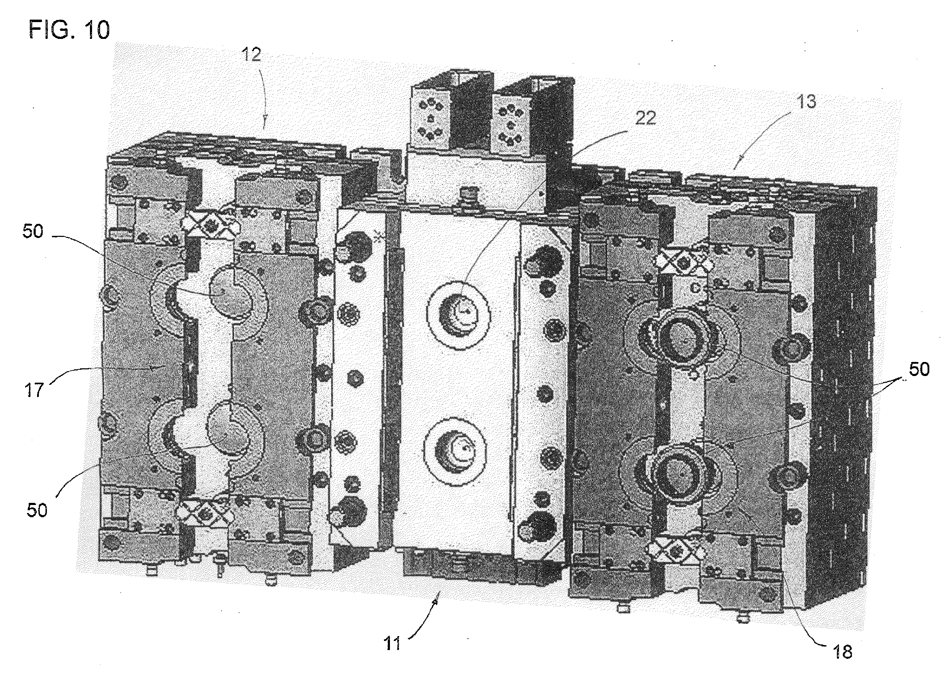

Similarly, according to the invention an apparatus is supplied provided with a fixed plate (back plate) 10 and a movable plate 30, as can be seen in Figures 3 to 6. However, unlike the majority of machines for moulding known to date, the apparatus according to the invention comprises a back plate 10 formed by at least three stations or modules 11, 12, 13 (see more particularly Fig. 10) and a movable plate formed by at least two stations or modules 31, 32. The reciprocal positions between the stations of the plate and of the back plate define the functions which the apparatus has to perform. Specifically the back plate 10 is formed by a central station 11 and by two lateral stations 12, 13 (Figure 10). The central station 11 is connected with the injection unit and has the sole purpose of injecting the plastic material for the formation of the parisons, while the lateral stations do not participate in the process of injection. Their function will be made clearer herein below.

The movable plate 30 is provided instead with two stations 31, 32 wholly similar one in relation to the other. In the exemplifying embodiment shown in the drawings, on each of these stations there are two punches 21 for the production of the parisons.

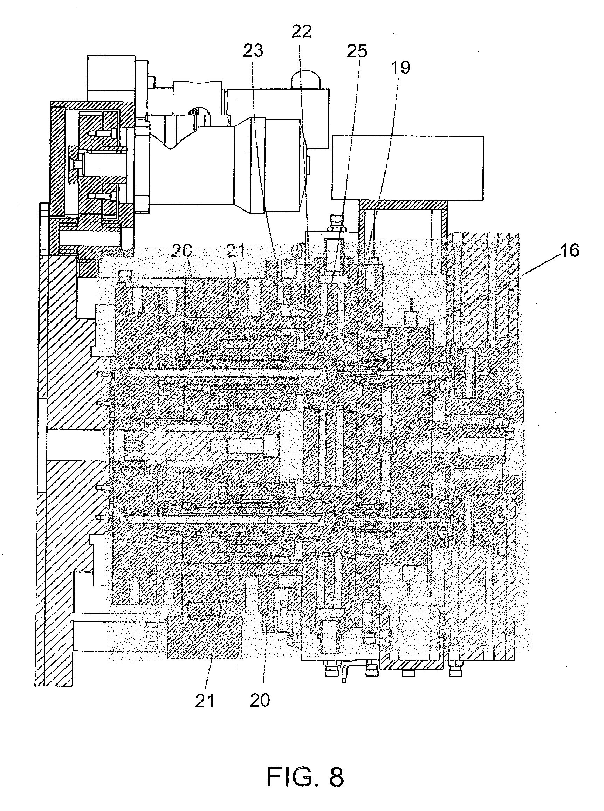

The phase of moulding of the parisons will be clear from a description made with reference to Figure 8. Figure 8 shows a vertical section taken along the median plane when the movable plate 30 and the back plate 10 are in contact, in particular in the points wherein the central station 11 of the back plate is in contact with the station 32 of the movable plate and injection takes place.

In this situation each punch 21 of the station 32 is accommodated in a respective die 22 present in the station 11 so as to define a moulding chamber 25, in communication with an injection device 16, fed in turn by a plasticization screw (not shown). The die 22 has cooling channels 19 for the circulation of cooling fluid just as the punch 21 has an internal tube 20 wherein coolant circulates. The injected molten plastic material thus takes the shape of the injection chamber 16 defined by the punch 21 and by the die 22, going to form the parison 1. A pair of jaws 23 can be widened around the punch and maintain the parison obtained.

Unlike what takes place in known moulding machines, the parison 1 obtained is not extracted but undergoes a process of blowing directly on the same apparatus which confers to it the final shape required. In this way it is no longer necessary to resort to the use of a different blowing apparatus, considerably simplifying the production process.

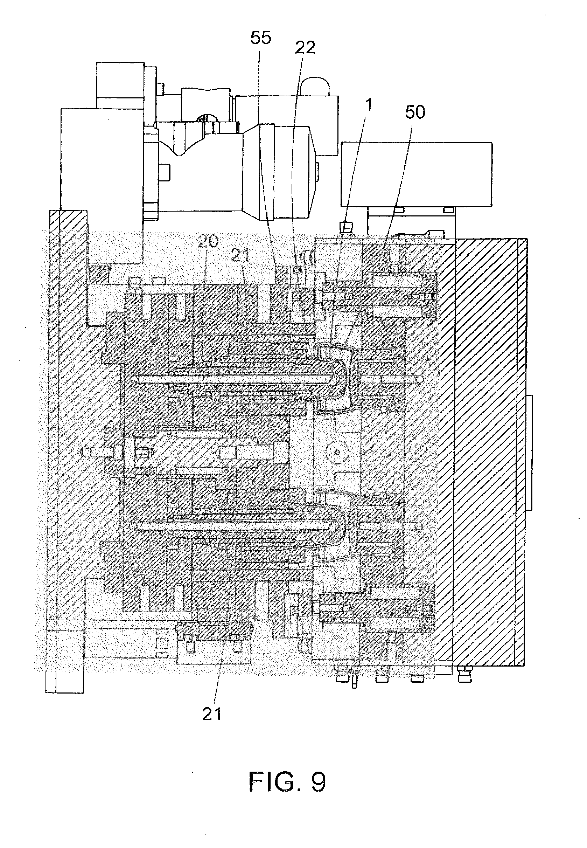

This is possible thanks to the presence of the lateral stations 12, 13 of the back plate 10 which themselves contain the dies necessary for the blowing. In practice the blowing is performed directly through appropriate blowing channels 55 present inside the stations 31, 32 of the movable plate 30 (Fig. 9), without having to extract the parisons from the punches whereon they have been formed.

According to the invention, the longitudinal or axial movement of the movable plate 30 in the direction of the back plate 10 in order to bring into contact the two plates takes place thanks to a frame 40 whereon it has been mounted. The frame 40 thus slides towards the back plate 10 supporting the movable plate 30. Moreover the plate 30 can slide transversely on said frame 40, parallel to it along appropriate guides 44 present thereon. In this way the stations 31, 32 of the plate 30 can occupy two positions, and therefore find themselves on the right or left side of the frame 40.

When the plates 10 and 30 are in contact, i.e. with die closed, one of the stations 31 or 32 of the plate 30 is in contact with the central injection station 11 of the back plate 10, while the other station of the movable plate 30 is in contact with one of the two lateral blowing stations 12, 13 of the back plate 10.

As already mentioned, the central station 11 of the back plate 10 comprises the injection system in order to carry out the formation of the parisons. The lateral stations 12 and 13, instead, are identical one to the other and have the function of conferring the final shape of the container during blowing. More particularly, they comprise dies 17, 18 which accommodate the parisons carried by the movable plate 30. In the embodiment shown in Figure 10, each die comprises two half-dies which can be opened to allow the extraction of the containers formed.

Referring to Figure 9, which shows a vertical section taken along a median plane of one of the lateral stations 12, 13 and one of the stations 31, 32 when they are in contact, a description is given of the process of blowing for the formation of the finished containers.

After having obtained the parisons 1 on the punch 21 of one of the two stations of the movable plate 30 as described previously, the movable plate 30 is moved away from the back plate 10 and the stations of the plate 30 are made to translate towards the right or left. When the two plates are once again in contact, the punches 22 carrying the parisons 1 are accommodated in the seats 50 of the dies 17, 18 present on the lateral stations. In fact the dies present in these stations are identical to those with which the blowing apparatuses are provided.

Once the parisons 1 have been accommodated in the seats 50 of the dies, air is blown through the aforementioned channels 55 into the parisons in order to confer to them the shape established by the seat 50 of the dies 17 or 18. In this way the finished containers are obtained on this station of the movable plate, while in the other station the parisons are obtained as illustrated previously.

The advantage of an apparatus according to the invention is thus clear. It allows the obtaining at the same time both of the parisons and the finished containers, on two different stations, practically eliminating the machine down times and reducing the costs linked thereto.

The fact of providing two translatable stations 31, 32 on the movable plate 30 which switch from one position to the other (right or left) means that one of the two is always in contact with the central injection station 11 of the back plate 10 and therefore at each actuation of the press the production of parisons takes place.

Referring to Figures 3 to 6, an example of a production cycle will now be described. In Figure 3 the movable plate 30 can be seen wherein on the station 31 the finished products 101 have just been formed and on the station 32 the parisons 1 have been formed. In fact, unlike other apparatuses for the production of plastic materials, it is not possible to define a "cycle start" or a "cycle end" given that when the cycle of production of a part has ended the production of another part has already begun. The advantages derived therefrom are evident.

In the embodiment shown in the drawings the formation is foreseen of two parisons and two finished containers at each moulding.

It is however clear that by increasing the number of punches and of the corresponding dies the production can be increased.

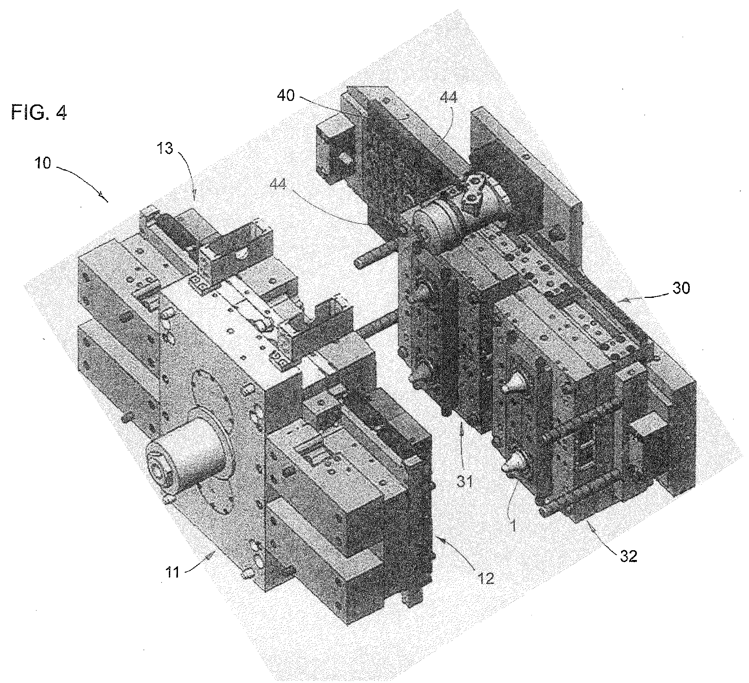

Once the finished parts 101 have been obtained as shown in Figure 3, they are extracted and therefore the punches 21 remain free. The stations 31, 32 are translated, in this case towards the right, and reach the position illustrated in Figure 4, where the station 32 carrying the parisons is in end position and the station 31 with the empty punches in central position.

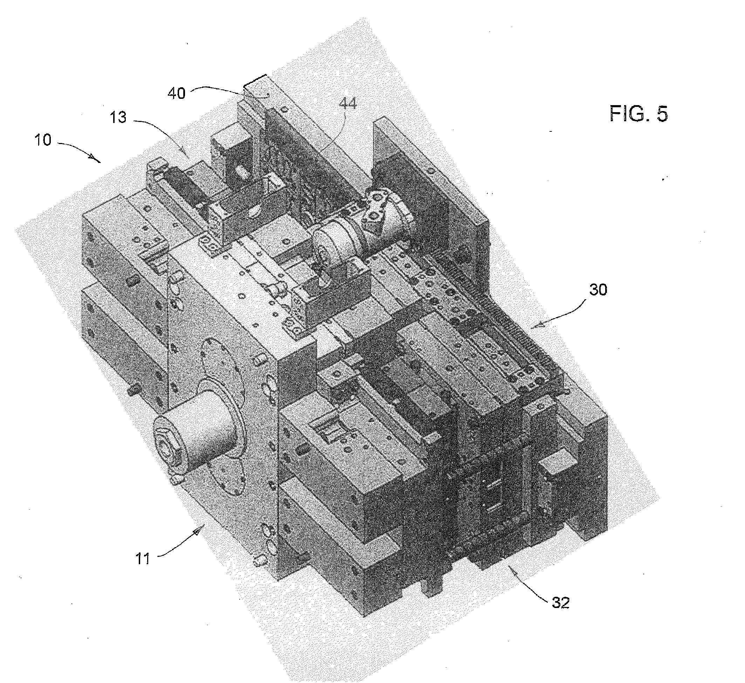

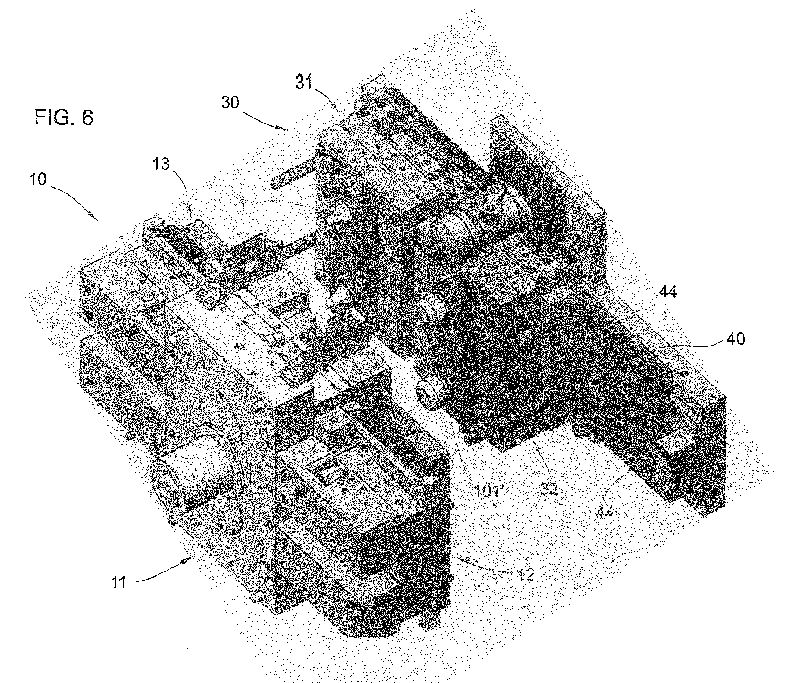

The two plates are then brought into contact (Figure 5), during which the formation of the parisons in the station 31 and the blowing of the parisons in the stations 32 on the dies contained in the lateral station 12 will take place for the formation of the finished containers 101'. Once the processes of injection and blowing have been performed, the plate 30 is moved away from the back plate 10 and the stations 31, 32 are translated towards the left, carrying both the parisons and the finished products, as can be seen in Figure 6. The latter are extracted from the punches 21 on the station 32 which remain free and ready for starting a new process of formation of the parisons, while on the other station 31 the parisons will be transformed into finished products and so on.

Figure 6 shows the finished containers 101' which have a different shape from the containers 101 shown in Figure 3. This occurs if different dies are used in the two stations 12, 13. In this way containers with different shapes are produced on a same machine. It is thus possible to define a cycle of production for each type of finished product 101, 101'. For example the formation of the finished products 101' takes place via the following steps: formation of the parisons on the punches after a first contact between the plates, translation of the stations, blowing of the parisons after a second contact, translation of the stations in the opposite direction, extraction of the finished products. All this while in the other station the parisons for the second type of finished product 101 have already been formed.

It is obviously possible to have two identical dies on the lateral stations 12, 13 thus having the production of a single type of container. In both the cases described the production process is very advantageous, in that the production is of one container (or more, according to the number of dies on the lateral stations) for every contact between the plates. In the case of a single type of die, every contact corresponds to the production of a part, therefore the production is in a ratio of 1:1. In the case of two different dies, three contacts correspond to the production of two products of one type and of one product of the other, therefore clearly a ratio of production of type of container per contact of 1:2.

It will therefore be understood that in the case wherein the production of one type of product is to be intensified, it is only necessary to replace the type of die on the apparatus. In both cases a system of high production is obtained at low costs and with high flexibility.

According to the invention, from 6 to 7 mouldings per minute can be obtained. Having stations with two units of moulding and blowing, 750 parts/hour can be obtained; with four units per station a production of 1500 parts/hour is achieved and so on.

It would likewise be possible to increase the number of the stations, although this entails a structural complication and an over-dimensioning of the apparatus.

Numerous detail variations and changes can be made to the embodiment of the invention described above, within the reach of a person skilled in the art and in any case coming within the scope of the invention expressed by the annexed claims.

## Claims

1. Apparatus for the production of containers in plastic material, such as jars, bottles or the like, suitable for being connected to a traditional machine for injection moulding and comprising a fixed plate or back plate (10) which can be connected to an injection system for the moulding of the plastic and a movable plate (30) carrying one or more punches (21), each punch (21) defining a moulding chamber (25) when in contact with a corresponding die (22) present on the back plate (10), for the production of a parison (1)
wherein:
- said movable plate comprises at least two stations or modules (31, 32) provided with said punches (21) and with blowing systems (55) positioned internally to said stations (31, 32) and connected to the punches;
- said back plate (10) comprises at least one central station (11) provided with said dies (22) and injection systems (16) for the moulding of the parisons (1) and at least two lateral stations (12, 13) containing dies for the blowing (17, 18) with respective seats (50) for receiving the parisons (1);
in such a way that, when the two plates (10, 30) are in contact, in one of the stations (31, 32) the moulding of the parisons (1) takes place and simultaneously in the other station the blowing of the parisons for the formation of finished containers (101, 101') takes place, with the parison (1) always in contact with the punches (21) whereon they have been formed, the apparatus being **characterized in that**:
- said movable plate (30) is carried by a frame (40) moving axially in the direction of the back plate (10) and is mounted thereon in such a way that it can slide in transverse direction along guides (44) present on said frame (40).

2. Apparatus for the production of containers in plastic material according to claim 1, wherein on each station (31, 32) of the movable plate (30) punches (21) and blowing systems (55) are provided in a number equal to the number of dies (22) and seats (50) provided in the station (11) of the back plate (10), and this number is greater than or equal to two.

3. Apparatus for the production of containers in plastic material according to any one of the preceding claims, wherein said dies (17, 18) provided in the stations (12, 13) of the back plate (10) have identical or different shapes one in relation to the other for the production of identical or different containers (101, 101').

4. Apparatus according to any one of the preceding claims, wherein said movable plate (30) is sliding transversally along a pair of tracks (44) on said support frame (40) in order to move said stations (31, 32) to the right or left end of the frame (40), in such a way that one of the stations (31, 32) positions alternately opposite to the central injection station (11) of the back plate (10) and the other station (32, 31) opposite to one of the lateral blowing stations (12, 13).

5. Apparatus according to any one of the preceding claims, wherein said dies (17, 18) of the lateral blowing stations (12, 13) of the back plate (10) comprise each two half-dies which can be opened in order to allow the extraction of the formed containers (101, 101').

6. Method for the production of containers in plastic material using an apparatus as defined in any one of the preceding claims, consisting in bringing one of said stations (31, 32) of the movable plate (30) alternately opposite to the central injection station (11) of the back plate (10) and the other station (32, 31) opposite to one of the lateral blowing stations (12, 13), in such a way that, at each contact between the movable plate (30) and the back plate (10) in one of said stations (31, 32) of the movable plate (30), moulding of the parisons (1) takes place and simultaneously in the other station (32, 31) blowing of the containers (101, 101') takes place with said parisons always in contact with the punches (21) whereon they have been formed.

## Patentansprüche

1. Vorrichtung zur Herstellung von Behältern aus Kunststoffmaterial, wie etwa Gefäße, Flaschen oder dergleichen, die zur Verbindung mit einer herkömmlichen Maschine zum Spritzgießen geeignet ist und eine starre Platte oder Rückplatte (10), die mit einem Einspritzsystem zum Gießen des Kunststoffs verbunden werden kann, und eine bewegliche Platte (30) umfasst, die eine oder mehr Stanzen (21) trägt, wobei jede Stanze (21) eine Gießkammer (25) definiert, wenn sie in Kontakt mit einem entsprechenden Werkzeug (22) ist, das an der Rückplatte (10) vorhanden ist, zur Erzeugung eines Vorformlings (1),
wobei:
- die bewegliche Platte zumindest zwei Stationen oder Module (31, 32) umfasst, die mit den Stanzen (21) und mit Blassystemen (55) versehen sind, welche innerhalb der Stationen (31,32) angeordnet und mit den Stanzen verbunden sind;
- die Rückplatte (10) zumindest eine zentrale Station (11), die mit den Werkzeugen (22) und Einspritzsystemen (16) zum Gießen der Vorformlinge (1) versehen ist, und zumindest zwei Seitenstationen (12, 13) umfasst, die Werkzeuge für das Blasen (17, 18) mit jeweiligen Sitzen (50) zum Aufnehmen der Vorformlinge (1) enthalten;
sodass, wenn die zwei Platten (10, 30) in Kontakt sind, in einer der Stationen (31, 32) das Gießen der Vorformlinge (1) stattfindet und gleichzeitig in der anderen Station das Blasen der Vorformlinge zur Ausbildung der fertiggestellten Behälter (101, 101') stattfindet, wobei die Vorformlinge (1) immer mit den Stanzen (21) in Kontakt sind, auf denen sie ausgebildet wurden, wobei die Vorrichtung **dadurch gekennzeichnet ist, dass**:
- die bewegliche Platte (30) durch einen Rahmen (40), der sich axial in der Richtung der Rückplatte (10) bewegt, getragen ist und derart daran angebracht ist, dass sie in Querrichtung entlang von Führungen (44), die am Rahmen (40) vorhanden sind, gleiten kann.

2. Vorrichtung zur Herstellung von Behältern aus Kunststoffmaterial nach Anspruch 1, wobei an jeder Stationen (31, 32) der beweglichen Platte (30) Stanzen (21) und Blassysteme (55) in einer Anzahl vorgesehen sind, die gleich der Anzahl von Werkzeugen (22) und Sitzen (50) ist, welche in der Station (11) der Rückplatte (10) vorgesehen sind, und wobei diese Anzahl größer als oder gleich zwei ist.

3. Vorrichtung zur Herstellung von Behältern aus Kunststoffmaterial nach einem der vorhergehenden Ansprüche, wobei die Werkzeuge (17, 18), die in den Stationen (12, 13) der Rückplatte (10) vorgesehen sind, identische oder voneinander abweichende Formen zur Produktion von identischen oder unterschiedlichen Behältern (101, 101') aufweisen.

4. Vorrichtung nach einem der vorhergehenden Ansprüche, wobei die bewegliche Platte (30) quer entlang eines Paars von Bahnen (44) am Stützrahmen (40) gleitet, um die Stationen (31, 32) zum rechten oder linken Ende des Rahmens (40) zu bewegen, sodass sich eine der Stationen (31, 32) abwechselnd gegenüber der zentralen Einspritzstation (11) der Rückplatte (10) positioniert und die andere Station (32, 31) gegenüber einer der seitlichen Blasstationen (12, 13).

5. Vorrichtung nach einem der vorhergehenden Ansprüche, wobei die Werkzeuge (17, 18) der seitlichen Blasstationen (12, 13) der Rückplatte (10) jedes zwei Halbwerkzeuge umfassen, die zum Ermöglichen des Herausnehmens der ausgebildeten Behälter (101, 101') geöffnet werden können.

6. Verfahren zur Herstellung von Behältern aus Kunststoffmaterial unter Benutzung einer Vorrichtung gemäß einem der vorherstehenden Ansprüche, bestehend aus dem Verbringen von einer der Stationen (31, 32) der beweglichen Platte (30) abwechselnd gegenüber der zentralen Einspritzstation (11) der Rückplatte (10) und der anderen Station (32, 31) gegenüber einer der seitlichen Blasstationen (12, 13), sodass bei jedem Kontakt zwischen der beweglichen Platte (30) und der Rückplatte (10) in einer der Stationen (31, 32) der beweglichen Platte (30) Gießen der Vorformlinge (1) stattfindet und gleichzeitig in der anderen Station (32, 31) Blasen der Behälter (101, 101') stattfindet, wobei die Vorformlinge immer in Kontakt mit den Stanzen (21) sind, auf denen sie ausgebildet wurden.

## Revendications

1. Dispositif pour la fabrication de récipients constitués d'une matière plastique, tels que des bocaux, des bouteilles ou similaires, approprié pour être raccordé à une machine classique pour le moulage par injection, et comprenant une plaque fixe ou plaque arrière (10) apte à être raccordée à un système d'injection pour le moulage de plastique, et une plaque mobile (30) portant un ou plusieurs poinçons (21), chaque poinçon (21) définissant une chambre de moulage (25) lorsqu'il est en contact avec une matrice correspondante (22) présente sur la plaque arrière (10), pour la fabrication d'une paraison (1),
dans lequel
- ladite plaque mobile comprend au moins deux stations ou modules (31, 32) pourvues desdits poinçons (21) et de systèmes de soufflage (55) positionnés à l'intérieur desdites stations (31, 32) et reliés aux poinçons ;
- ladite plaque arrière (10) comprend au moins une station centrale (11) pourvue desdites matrices (22) et de systèmes d'injection (16) pour le moulage des paraisons (1), et au moins deux stations latérales (12, 13) contenant des matrices pour le soufflage (17, 18) avec des supports (50) respectifs destinés à recevoir les paraisons (1) ;
de telle façon que, lorsque les deux plaques (10, 30) sont en contact, le moulage des paraisons (1) a lieu dans l'une des stations (31, 32) et le soufflage des paraisons a lieu simultanément dans l'autre station, pour la formation de récipient finis (101, 101'), les paraisons (1) restant toujours en contact avec les poinçons (21) sur lesquels elles ont été formées, le dispositif étant **caractérisé en ce que** :
- ladite plaque mobile (30) est supportée par un cadre (40) se déplaçant axialement dans la direction de la plaque arrière (10), et montée sur celui-ci de manière à pouvoir coulisser dans la direction transversale le long de guides (44) présents sur le cadre (40).

2. Dispositif pour la fabrication de récipients constitués d'une matière plastique selon la revendication 1, dans lequel des poinçons (21) et des systèmes de soufflage (55) sont prévus sur chaque station (31, 32) de la plaque mobile (30), en nombre égal au nombre de matrices (22) et de supports (50) prévus dans la station (11) de la plaque arrière (10), et ce nombre étant supérieur ou égal à deux.

3. Dispositif pour la fabrication de récipients constitués d'une matière plastique selon l'une quelconque des revendications précédentes, dans lequel lesdites matrices (17, 18) prévues dans les stations (12, 13) de la plaque arrière (10) présentent des formes identiques ou différentes les unes par rapport aux autres, pour la fabrication de récipients (101, 101') identiques ou différents.

4. Dispositif selon l'une quelconque des revendications précédentes, dans lequel ladite plaque mobile (30) coulisse transversalement le long d'une paire de pistes (44) sur ledit cadre de support (40), afin de déplacer lesdites stations (31, 32) vers l'extrémité de droite ou de gauche du cadre (40), de manière à positionner alternativement l'une des stations (31, 32) à l'opposé de la station d'injection centrale (11) de la plaque arrière (10) et l'autre station (32, 31) à l'opposé de l'une des stations de soufflage latéral (12, 13).

5. Dispositif selon l'une quelconque des revendications précédentes, dans lequel lesdites matrices (17, 18) des stations de soufflage latéral (12, 13) de la plaque arrière (10) comprennent respectivement deux demi-matrices susceptibles d'être ouvertes pour permettre l'extraction des récipients (101, 101') moulés.

6. Procédé pour la fabrication de récipients constitués d'une matière plastique à l'aide d'un dispositif selon l'une quelconque des revendications précédentes, consistant à déplacer l'une des stations (31, 32) de la plaque mobile (30) alternativement à l'opposé de la station d'injection centrale (11) de la plaque arrière (10), et à déplacer l'autre station (32, 31) simultanément à l'opposé de l'une des stations de soufflage latéral (12, 13), de telle façon que le moulage des paraisons (1) a lieu à chaque contact entre la plaque mobile (30) et la plaque arrière (10) dans l'une desdites stations (31, 32) de la plaque mobile (30), et le soufflage des récipients (101, 101') a lieu simultanément dans l'autre station (32, 31), lesdites paraisons restant toujours en contact avec les poinçons (21) sur lesquels elles ont été formées.
